(19)

Europäisches
Patentamt
European
Patent Office
Office européen
des brevets

(11) **EP 2 883 929 A1**

(12) **EUROPEAN PATENT APPLICATION**
published in accordance with Art. 153(4) EPC

(43) Date of publication:
**17.06.2015 Bulletin 2015/25**

(21) Application number: **13828147.2**

(22) Date of filing: **09.08.2013**

(51) Int Cl.:
*C09K 5/06* (2006.01)          *C08K 5/01* (2006.01)
*C08L 53/00* (2006.01)          *F28D 20/00* (2006.01)

(86) International application number:
**PCT/JP2013/071987**

(87) International publication number:
**WO 2014/025070 (13.02.2014 Gazette 2014/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.08.2012  JP 2012177787**

(71) Applicant: **JSR Corporation
Minato-ku
Tokyo 105-0021 (JP)**

(72) Inventors:
• **KANAE, Kentarou
  Tokyo 105-0021 (JP)**
• **KOMIYAMA, Susumu
  Tokyo 105-0021 (JP)**
• **MORITA, Michio
  Tokyo 105-0021 (JP)**

(74) Representative: **TBK
Bavariaring 4-6
80336 München (DE)**

(54) **COMPOSITION FOR HEAT STORAGE MATERIAL**

(57)    A heat storage material composition comprising:
(A) a linear saturated hydrocarbon compound having 2n carbon atoms;
(B) a linear saturated hydrocarbon compound having (2n+m) carbon atoms; and
(C) an organic compound having a molecular weight of 50 to 300, a solubility parameter of 5 to 8. 5 $(cal/cm^3)^{0.5}$ and a melting point measured by a differential scanning calorimeter which is 30°C or more lower than that of the linear saturated hydrocarbon compound (B), wherein

"n" is a single number selected from a natural number of 4 or more, "n" in the linear saturated hydrocarbon compound (A) and "n" in the linear saturated hydrocarbon compound (B) are the same, "m" is -3, -1, +1 or +3, and the mass ratio $M_A:M_B$ of the content $M_A$ of the above linear saturated hydrocarbon compound (A) to the content $M_B$ of the above linear saturated hydrocarbon compound (B) is 99:1 to 80:20

EP 2 883 929 A1

**Description**

TECHNICAL FIELD

The present invention relates to a heat storage material composition. More specifically, it relates to a heat storage material composition which makes use of latent heat produced by the phase change of linear saturated hydrocarbon compounds, enables the setting of a desired phase change temperature by selecting its constituent components and adjusting their ratio and has a large amount of latent heat.

BACKGROUND ART

The term "heat storage material" means a material which contains a substance (heat storage medium) having a large amount of energy (heat capacity or sensible heat) produced by a temperature variation in the single phase of the substance or by the phase change of the substance and can extract heat stored in the heat storage medium as needed. The heat storage material is available in various forms such as gel, emulsion and capsule and used in various fields such as heat pumps, air conditioners for buildings, houses and underground malls, air conditioners for automobiles, canisters, for the prevention of a temperature rise in electronic parts such as IC chips, for the thermal insulation of transport vessels for apparel fibers, fresh foods and organs; for keeping structural materials for roads and bridges at a constant temperature; for the antifogging of curved mirrors; for cooling or keeping home appliances such as refrigerators at a constant temperature; and refrigerants as living ware and warmers in the presence or absence of a heat transport medium such as water.

In the past, heat storage materials containing water as a heat storage medium were generally used. However, when water is used as a heat storage medium, only sensible heat is utilized in many cases. Then, to obtain a larger heat storing effect, a heat storage material making use of latent heat produced by a phase change in addition to sensible heat is attracting attention.

As a heat storage medium capable of using latent heat, there are known paraffin compounds (saturated hydrocarbon compounds). Most of the paraffin compounds belong to the class 4 of hazardous materials designated under Fire Defense Law, require especial care in handling and need a measure for the prevention of leakage.

The applicant of the present application proposes a technology using a specific hydrogenated diene-based copolymer as a binder component together with a paraffin compound in a heat storage material capable of preventing the leakage of the paraffin compound without using a strong and expensive vessel (refer to WO2001/078340). According to this technology, even when the maximum crystal transition temperature ($T_{max}$, corresponding to a melting peak temperature or melting point in many cases) of the paraffin compound in use is exceeded, phase separation and the bleeding of the paraffin compound are not seen and shape retention properties after solidification are satisfactory while excellent flowability is exhibited during molding. However, in this technology, the phase change temperature of the heat storage material is selected only by choosing the type of the paraffin compound. For example, when the number of carbon atoms is 25 or less, the melting point rises discontinuously or stepwise every time the number of carbon atoms of the paraffin compound increases by 1. Therefore, since the phase change temperature of the heat storage material containing a paraffin compound can be selected stepwise, it is impossible to meet the requirement for an intermediate phase change temperature.

In this regard, there is proposed a technology for creating an intermediate phase change temperature by mixing a freezing-point depressant with a paraffin compound. According to this technology, although a desired phase change temperature can be created by selecting a paraffin compound and a freezing-point depressant and changing their amounts, the heat storage capacity is reduced.

Therefore, a heat storage material which can create an intermediate phase change temperature and has a large heat storage capacity is still unknown.

DISCLOSURE OF THE INVENTION

It is an object of the present invention which has been made in view of the above situation to provide a heat storage material composition which can set the phase change temperature arbitrarily while it retains a sufficient amount of latent heat.

According to the present invention, the above object and advantage of the present invention are attained by a heat storage material composition comprising:

(A) a linear saturated hydrocarbon compound having 2n carbon atoms;
(B) a linear saturated hydrocarbon compound having (2n+m) carbon atoms; and
(C) an organic compound having a molecular weight of 50 to 300, a solubility parameter of 5 to 8.5 $(cal/cm^3)^{0.5}$ and

a melting point measured by a differential scanning calorimeter which is 30°C or more lower than the melting point of the linear saturated hydrocarbon compound (B),

wherein
the above "n" is a single number selected from a natural number of 4 or more, "n" in the linear saturated hydrocarbon compound (A) and "n" in the linear saturated hydrocarbon compound (B) are the same, "m" is -3, -1, +1 or +3, and the mass ratio $M_A: M_B$ of the content $M_A$ of the above linear saturated hydrocarbon compound (A) to the content $M_B$ of the above linear saturated hydrocarbon compound (B) is 99:1 to 80:20.

Preferably, the above heat storage material composition further comprises (D) a binder component.

BEST MODE FOR CARRYING OUT THE INVENTION

The heat storage material composition of the present invention comprises (A) a linear saturated hydrocarbon compound having 2n carbon atoms, (B) a linear saturated hydrocarbon compound having (2n+m) carbon atoms, and (C) a specific organic compound. Preferably, it further comprises (D) a binder component.

In the above description, "n" is a single number selected from a natural number of 4 or more, "n" in the linear saturated hydrocarbon compound (A) and "n" in the linear saturated hydrocarbon compound (B) are the same, and "m" is -3, -1, +1 or +3.

<Linear saturated hydrocarbon compound (A)>

"n" in the present invention is a single number selected from a natural number of 4 or more, and the number of carbon atoms of the linear saturated hydrocarbon compound (A) is 2n. The amount of latent heat in the heat storage material composition of the present invention can be increased by using this linear saturated hydrocarbon compound (A).

The above "n" is a single number selected from a natural number of preferably 5 to 12, more preferably 6 to 10. The value of "n" is suitably selected from the above range according to a desired phase change temperature.

A linear saturated hydrocarbon compound having a melting peak temperature (melting point) of -20 to 50°C when measured by a differential scanning calorimeter (DSC) is preferably selected and used as the linear saturated hydrocarbon compound (A) from the viewpoint of making effective use of heat at an ambient temperature range at which the heat storage material composition of the present invention is used.

Preferred examples of the linear saturated hydrocarbon compound (A) are given below together with their melting points.

n-octane (-57°C), n-decane (-30°C), n-dodecane (-12°C), n-tetradecane (6°C), n-hexadecane (18°C), n-octadecane (28°C), n-icosane (37°C) and n-docosane (46°C).

Although these linear saturated hydrocarbon compounds may be used in combination of two or more, it is preferred to use only one selected from the above compounds in order to obtain a clear and single phase change temperature.

<Linear saturated hydrocarbon compound (B)>

The number of carbon atoms of the linear saturated hydrocarbon compound (B) in the present invention is (2n+m). This "n" is the same as "n" in 2n which is the number of carbon atoms of the above linear saturated hydrocarbon compound (A) . "m" is -3, -1, +1 or +3. The value of "m" is preferably -3, -1 or +1, more preferably -1 or +1, most preferably -1. Therefore, the number of carbon atoms of the linear saturated hydrocarbon compound (B) in the most preferred embodiment of the present invention is one less than the number of carbon atoms of the above linear saturated hydrocarbon compound (A) .

The amount of latent heat in the obtained heat storage material composition can be increased by using this linear saturated hydrocarbon compound (B).

Preferred examples of the linear saturated hydrocarbon compound (B) are given below together with their melting points.

n-heptane (-91°C), n-nonane (-51°C), n-undecane (-21°C), n-tridecane (-5°C), n-pentadecane (9°C), n-heptadecane (21°C), n-nonadecane (32°C) and n-henicosane (41°C).

<ratio of linear saturated hydrocarbon compounds>

As for the ratio of the linear saturated hydrocarbon compound (A) and the linear saturated hydrocarbon compound (B), the mass ratio $M_A:M_B$ of the content $M_A$ of the above linear saturated hydrocarbon compound (A) to the content $M_B$ of the above linear saturated hydrocarbon compound (B) in the heat storage material composition is 99:1 to 80:20. This value is preferably 97:3 to 80:20, more preferably 95:5 to 80:20. By setting the mass ratio to this range, a clear and single phase change temperature can be set, and also the amount of latent heat of the obtained heat storage material composition is not reduced. When 2n is in the range of 8 to 22, a linear saturated hydrocarbon compound having an even number (2n) of carbon atoms has a larger amount of latent heat than that of a linear saturated hydrocarbon compound having an odd number (2n+m) (m is -3, -1, +1 or +3) of carbon atoms. Therefore, by increasing the content of the linear saturated hydrocarbon compound (A) out of the linear saturated hydrocarbon compounds (A) and (B), it is possible to adjust the phase change temperature arbitrarily while a large amount of latent heat is retained.

<Organic compound (C)>

The organic compound (C) in the present invention has the above predetermined molecular weight, solubility parameter and melting peak temperature (melting point) measured by a differential scanning calorimeter. This organic compound (C) has a molecular weight of 50 to 300, preferably 50 to 200; a solubility parameter of 5 to 8.5 $(cal/cm^3)^{0.5}$, preferably 6 to 8 $(cal/cm^3)^{0.5}$; and a melting point which is 30°C or more, preferably 45 to 130°C lower than the melting point of the above linear saturated hydrocarbon compound (B). When the melting point of the linear saturated hydrocarbon compound (A) is lower than the melting point of the linear saturated hydrocarbon compound (B), the organic compound (C) meets the above requirements and further has a melting point which is preferably 30°C or more, more preferably 45 to 130 °C lower than the melting point of the linear saturated hydrocarbon compound (A).

The organic compound (C) which exhibits such physical properties serves like a so-called "freezing-point depressant" in the heat storage material composition of the present invention so that it can reduce the phase change temperature of a mixture of the linear saturated hydrocarbon compound (A) and the linear saturated hydrocarbon compound (B) effectively. Thereby, a desired freezing-point reducing effect can be obtained while a reduction in the amount of latent heat of the heat storage material composition of the present invention is minimized.

The above solubility parameter (SP) can be calculated from the following mathematical expression (1).

$$SP = d(\textstyle\sum\triangle F)/M \qquad\qquad (1)$$

(In the above mathematical expression (1), d is a density, $\triangle F$ is a molar attractive constant, and M is a molecular weight.)

The sum ($\sum\triangle F$) of the molar attractive constant can be determined according to "Role of Solubility Parameter (SP) in Solubility Theory (Part 1)", Adhesion Society of Japan, vol. 29, No. 5, pp 204-211 (1993).

Examples of this organic compound (C) include α-olefins, n-hexane, isoparaffins, fatty acid ethers, aliphatic ketones, aliphatic alcohols and fatty acid esters. At least one selected from these may be used. Specific examples of these are given below together with their melting points. The above α-olefins include 1-decene (-66°C), 1-dodecene (-35°C), 1-tridecene (-23°C) and 1-tetradecene (-13°C); the above isoparaffins include branched alkanes having 10 to 30 carbon atoms; the above fatty acid ethers include di-n-butyl ether (-98°C), di-n-hexyl ether (-43°C) and di-n-heptyl ether (-24°C); the above aliphatic ketones include 2-octanone (-22°C), 3-octanone (-24°C), 2-nonanone (-9°C), 3-nonanone (-12°C) and cycloheptanone (-25°C); the above aliphatic alcohols include 1-hexanol (-52°C), 1-heptanol (-36°C), 1-octanol (-16°C), ethylene glycol (-13°C) and geraniol(3,7-dimethylocta-2,6-dien-1-ol) (15°C); the above fatty acid esters include butyl lactate (-28°C), ethyl lactate (-26°C), methyl oleate (-40°C), diethyl succinate (-23°C), ethyl decanoate (-21°C), methyl decanoate (-14°C) and butyl dodecanoate (-8°C). The melting point of the above n-hexane is -95°C. The above isoparaffins further include 2,2,4,4,6,8,8-heptamethylnonane (0°C).

The content of the organic compound (C) in the heat storage material composition of the present invention should be suitably set according to the desired melting point of the composition. In order to achieve a balance between the freezing-point reducing effect and the maintenance of the amount of latent heat of the composition, the mass ratio $((M_A+M_B) : M_C)$ of the total of the content $M_A$ of the above linear saturated hydrocarbon compound (A) and the content $M_B$ of the above linear saturated hydrocarbon compound (B) to the content $M_C$ of the organic compound (C) is preferably 99:1 to 80: 20, more preferably 97:3 to 85:15, much more preferably 95:5 to 90:10. When the content of the organic compound is set to this range, it is possible to set the desired melting point of the composition without reducing the amount of latent heat in the heat storage material composition of the present invention.

<Binder component (D) >

At least one polymer selected from the group consisting of elastomers and thermoplastic resins or at least one fatty acid metal salt is used as the binder component (D) to be contained in the heat storage material composition in a preferred embodiment of the present invention.

The above elastomers include hydrogenated block (co)polymers, conjugated diene rubbers (excluding the hydrogenated block (co)polymers, the same shall apply hereinafter) and ethylene·$\alpha$-olefin copolymer rubbers. At least one selected from these may be used. These elastomers have suitable rubber elasticity and serve as a binder component which clathrates the linear saturated hydrocarbon compound (A) and the linear saturated hydrocarbon compound (B) advantageously. Therefore, it is easy to handle a heat storage material composition comprising an elastomer as the binder component (D) and form it into a desired shape before use advantageously. Further, since these elastomers can retain rubber elasticity at a temperature range higher than the melting points of the linear saturated hydrocarbon compound (A) and the linear saturated hydrocarbon compound (B), a heat storage material composition comprising one of the elastomers as the binder component (D) has excellent shape retention properties at all the temperature range in use advantageously when the heat storage material composition is used as a heat storage material. It is more preferred to use a thermoplastic elastomer out of the above elastomers because workability at the time of producing a heat storage material and workability when the obtained heat storage material is filled into a vessel become excellent. A hydrogenated block (co)polymer is particularly preferred as the elastomer.

The above hydrogenated block (co) polymer is preferably a block (co)polymer having at least a polymer block (1) and a polymer block (2).

The above polymer block (1) is preferably a hydrogenated product of a conjugated diene (co) polymer block. The vinyl bond content of the conjugated diene (co)polymer block before hydrogenation is preferably 30 to 95 mol%, more preferably 50 to 75 mol%, much more preferably 55 to 65 mol% from the viewpoint of retaining shape retention properties at the normal temperature (10 to 40°C) of the obtained heat storage material. The term "vinyl bond content" refers to the percentage of a conjugated diene incorporated in the forms of 1,2-bond and 3,4-bond out of conjugated dienes incorporated in the forms of 1,2-bond, 3,4-bond and 1,4-bond in the conjugated diene (co)polymer block before hydrogenation (the same shall apply hereinafter).

Examples of the conjugated diene as a raw material of the above polymer block (1) include 1, 3-butadiene, isoprene, 2,3-dimethyl-1,3-butadiene, 1,3-pentadiene, 2-methyl-1,3-pentadiene, 1,3-hexadiene, 4,5-diethyl-1,3-octadiene and chloroprene. At least one selected from these is preferably used. At least one selected from the group consisting of 1,3-butadiene, isoprene and 1,3-pentadiene out of these is preferably used as they are easily industrially acquired and a heat storage material composition having excellent physical properties can be obtained. The conjugated diene as a raw material of the polymer block (1) which contains at least 95 mass% of 1, 3-butadiene is preferred, and it is particularly preferred to use only 1,3-butadiene.

The hydrogenation rate of the polymer block (1) is preferably not less than 90 %, more preferably not less than 95 % from the viewpoint of the shape retention properties of the obtained heat storage material.

This polymer block (1) can function as a soft segment block which imparts rubber properties to the hydrogenated block (co)polymer.

The above polymer block (2) is, for example, an alkenyl aromatic compound (co) polymer block or an olefin (co) polymer block. At least one selected from these may be used. Out of these, the olefin (co)polymer block is preferably a crystalline olefin (co)polymer block.

Examples of an alkenyl aromatic compound which is a raw material of the above alkenyl aromatic compound (co)polymer block include styrene, t-butylstyrene, $\alpha$-methylstyrene, p-methylstyrene, divinylbenzene, N,N-diethyl-p-aminostyrene and vinyl pyridine, out of which styrene and $\alpha$-methylstyrene are preferred and styrene is particularly preferred.

The above crystalline olefin (co)polymer block is preferably a hydrogenated product of a conjugated diene (co)polymer block, more preferably a hydrogenated product of a conjugated diene (co)polymer block having a vinyl bond content of the conjugated diene of less than 30 mol%. The above vinyl bond content is preferably not more than 20 mol%, more preferably not more than 18 mol% from the viewpoint of preventing the bleeding of the linear saturated hydrocarbon compounds in the obtained heat storage material effectively. The vinyl bond content may be 0 mol%.

The conjugated diene as a raw material of this crystalline olefin (co)polymer block is the same as those enumerated as the conjugated diene which is a raw material of the polymer block (1) in the hydrogenated block (co)polymer. At least one selected from these is preferably used. The conjugated diene which is a raw material of the crystalline olefin (co) polymer block preferably contains not less than 95 mass% of at least one selected from 1, 3-butadiene and isoprene, and it is particularly preferred to use only one selected from 1,3-butadiene and isoprene.

In this crystalline olefin (co)polymer block, the alkenyl aromatic compound may be copolymerized together with the conjugated diene. Examples of this alkenyl aromatic compound are the same as those enumerated as a raw material of the alkenyl aromatic compound (co)polymer block, and at least one selected from these may be used.

When the alkenyl aromatic compound is copolymerized together with the conjugated diene in the crystalline olefin (co)polymer block, the alkenyl aromatic compound may be random-copolymerized in this block, or a small number of alkenyl aromatic compounds may constitute a continuous short block or a tapered block in which the content of the alkenyl aromatic compound changes gradually in the block.

The copolymerization ratio of the alkenyl aromatic compound in the crystalline olefin (co)polymer block is preferably not more than 50 mass%, more preferably not more than 30 mass%, particularly preferably not more than 20 mass% from the viewpoint of securing flowability during the molding of the obtained heat storage material composition.

The hydrogenation rate of the crystalline olefin (co)polymer block is preferably not less than 90 %, more preferably not less than 95 % from the viewpoint of the shape retention properties of the obtained heat storage material. This hydrogenation rate is a value calculated based on a double bond derived from the conjugated diene, and an unsaturated bond contained in an aromatic ring is not reflected on the calculation of this hydrogenation rate even when the crystalline olefin (co)polymer block is a hydrogenated product of an alkenyl aromatic compound copolymer.

The polymer block (2) can function as a hard segment block which imparts shape retention properties to the hydrogenated block (co)polymer.

The mass ratio ($M_1/M_2$) of the content $M_1$ of the polymer block (1) to the content $M_2$ of the polymer block (2) in the above hydrogenated block (co)polymer is preferably 95/5 to 50/50, more preferably 90/10 to 60/40 from the viewpoints of securing the shape retention properties of the obtained heat storage material and preventing the bleeding of the linear saturated hydrocarbon compounds in the heat storage material effectively.

The block configuration of the hydrogenated block (co)polymer is expressed by the following structural formulas when the polymer block (1) is represented by S and the polymer block (2) is represented by H.

$$(S\text{-}H)_{n1}$$

$$(S\text{-}H)_{n2}\text{-}S$$

$$(H\text{-}S)_{n3}\text{-}H$$

In the above formulas, n1 to n3 are each an integer of 1 or more, preferably 1 to 3. When there exist a plurality of the polymer blocks (1) or the polymer blocks (2) in the above structural formulas, they may be the same or different.

The hydrogenated block (co)polymer may be a linear (co)polymer in which blocks constituting it are bonded together linearly, a graft (co) polymer in which these blocks are bonded together in a branched form, or a star polymer in which these blocks are bonded together in a star form.

The weight average molecular weight (Mw) in terms of polystyrene measured by gel permeation chromatography (GPC) of the above hydrogenated block (co)polymer is preferably 200,000 to 700,000, more preferably 200,000 to 600,0000, particularly preferably 250,000 to 500,000. Mw is preferably not less than 200,000 in order to obtain required mechanical properties and further prevent the phase separation of the composition and the bleeding of the linear saturated hydrocarbon compounds and not more than 700,000 in order to secure flowability for the molding of the heat storage material.

The hydrogenated block (co) polymer has a melting point measured by a differential scanning calorimeter (DSC) of preferably 70 to 140°C, more preferably 80 to 120°C. The melting point of the hydrogenated conjugated diene copolymer means an extrapolation melting start temperature (Tim) measured in accordance with JIS K-7121.

The melt flow rate (may be abbreviated as "MFR" hereinafter) of the hydrogenated block (co)polymer is not particularly limited but preferably 0.01 to 100 g/10 min. MFR of the hydrogenated block (co) polymer is a value measured under a load of 10 kg at 230°C in accordance with JIS K-7210.

This hydrogenated block (co)polymer may be produced by methods described in Patent No. 3134504 and Patent No. 3360411.

As the above hydrogenated block (co)polymer, for example, a hydrogenated product of a block (co)polymer of an alkenyl aromatic compound and a conjugated diene compound or a crystalline olefin block (co)polymer (a hydrogenated product of a conjugated diene-based block (co)polymer) is preferably used. These hydrogenated block (co)polymers are preferred because heat storage material compositions comprising these exhibit excellent workability when they are filled into a vessel.

As specific examples of the hydrogenated block (co)polymer, examples of the above hydrogenated product of a block (co)polymer of an alkenyl aromatic compound and a conjugated diene compound include a styrene-ethylene/butylene-styrene block (co)polymer (SEBS), styrene-ethylene/propylene-styrene block (co)polymer (SEPS), styrene-ethylene/butylene block (co)polymer (SEB) and styrene-ethylene/propylene block (co) polymer (SEP); and examples of the above crystalline olefin block (co)polymer include alkenyl aromatic compound-olefin block (co) polymers such as styrene-ethylene/butylene-olefin block (co)polymer (SEBC) and olefin block (co)polymers such as olefin-ethylene/butylene-olefin block (co)polymer (CEBC).

CEBC is preferred as the hydrogenated bock (co) polymer in the present invention from the viewpoint of flowability during the molding of the obtained heat storage material composition and compatibility with the linear saturated hydrocarbon compounds.

The above conjugated diene rubbers include natural rubbers; and synthetic rubbers such as butadiene rubber (BR), styrene·butadiene rubber (SBR), nitrile rubber (NBR), isoprene rubber (IR) and butyl rubber (IIR).

The above ethylene·$\alpha$-olefin copolymer rubbers include bipolymer rubbers of ethylene and an $\alpha$-olefin and

terpolymer rubbers of ethylene, an α-olefin and an unconjugated diene. The above α-olefin is an α-olefin having preferably 3 to 20, more preferably 3 to 8 carbon atoms. Specific examples thereof include propylene and 1-octene. Examples of the above unconjugated diene include ethylidene-2-norbornene, 1,4-hexadiene and dicyclopentadiene. Therefore, specific examples of the ethylene·α-olefin copolymer rubbers include ethylene·propylene copolymer rubber (EPM) and ethylene· propylene·ethylidene norbornene copolymer rubber.

The above thermoplastic resins include polyolefins and ethylene·vinyl acetate copolymer.

An α-olefin is preferably used as an olefin which is the raw material of the polyolefin, and an α-olefin having 2 to 12 carbon atoms is more preferably used. More specifically, it is preferred to use at least one selected from ethylene, propylene, 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene.

A polyolefin having crystallinity is preferably used as the polyolefin, as exemplified by polyethylene, polypropylene, poly-1-butene and poly-4-methyl-1-pentene. Out of these, crystalline polyethylene or crystalline polypropylene is preferably used from the viewpoint of general versatility, and crystalline polyethylene is particularly preferably used. This crystalline polyethylene may be low-density polyethylene (LDPE), medium density polyethylene (MDPE), high density polyethylene (HDPE), linear low-density polyethylene (LLDPE), ethylene· propylene copolymer, ethylene·octene copolymer or biopolyethylene.

The melting point measured by a differential scanning calorimeter (DSC) of the crystalline polyethylene is preferably 80 to 140°C, more preferably 90 to 140°C, much more preferably 100 to 140°C. It is preferred to use crystalline polyethylene having a melting point higher than the melting point of the linear saturated hydrocarbon compound (A) in use and more preferred to use crystalline polyethylene having a melting point which is 20°C or more higher than the melting point of the linear saturated hydrocarbon compound (A). The amount of melting heat measured by a differential scanning calorimeter (DSC) of the crystalline polyethylene is preferably not less than 50 kJ/kg from the viewpoint of the shape retention properties of the heat storage material at a high temperature range.

The melt flow rate (MFR) under a load of 2.16 kg at a temperature of 190°C in accordance with JIS K-7210 of the crystalline polyethylene is preferably 0.01 to 100 g/10 min, more preferably 0.1 to 80 g/10 min.

Mw of the polyolefin is preferably 1, 000 to 10, 000, 000, more preferably 10, 000 to 5, 000, 000, particularly preferably 10,000 to 1,000,000.

When a polymer is used as the binder component (D) in the present invention, an elastomer is preferably used and a hydrogenated block (co) polymer is particularly preferably used as the polymer because the separation and bleeding of the component hardly occur, the long-term durability becomes high, and the physical properties of a heat storage material composition comprising this rarely deteriorate even when its molding is repeated.

When the heat storage material composition of the present invention is used at a relatively high temperature (for example, when the phase transition temperature is set to 80°C or higher), it is preferred to use a mixture of CEBC or SEBC and a polyolefin as the binder component (D). As for the mixing ratio of these, the amount of the polyolefin is preferably 10 to 50 mass% based on the total of CEBC or SEBC and the polyolefin from the viewpoint of securing the shape retention properties of the obtained heat storage material at a high temperature.

The above fatty acid metal salt has the function of clathrating and binding the linear saturated hydrocarbon compounds in the heat storage material composition in order to prevent the bleeding of the linear saturated hydrocarbon compounds from the heat storage material composition.

The fatty acid metal salt is preferably a metal salt of an aliphatic carboxylic acid or aliphatic hydroxycarboxylic acid having 4 to 24 carbon atoms, more preferably a metal salt of an aliphatic carboxylic acid having 4 to 24 carbon atoms. It is a metal salt of an aliphatic carboxylic acid having much more preferably 6 to 24 carbon atoms, particularly preferably 8 to 24 carbon atoms.

Examples of the aliphatic carboxylic acid constituting the fatty acid metal salt include 2-ethylhexanoic acid, lauric acid, myristic acid, palmitic acid, stearic acid, isostearic acid, behenic acid, undecylenic acid, oleic acid, linoleic acid and linolenic acid. Out of these, 2-ethylhexanoic acid is particularly preferred as the fatty acid.

The metal species constituting the fatty acid metal salt include alkali metals such as sodium, potassium and lithium, alkali earth metals such as magnesium and calcium, and other metals such as aluminum, manganese and lead. Out of these, metal ion salts having a valence of 2 or more are preferred, and aluminum salts are particularly preferred.

The fatty acid metal salt as the binder component (D) in the present invention is particularly preferably aluminum 2-ethylhexanoate. Commercially available products of aluminum 2-ethylhexanoate include Octope Alumi A (of Hope Chemical Co., Ltd.).

The fatty acid metal salts may be used alone or in combination of two or more.

The above fatty acid metal salt may be used alone as the binder component (D) in the present invention, or a mixture of a fatty acid metal salt and a fatty acid may be used as the binder component (D). When a fatty acid metal salt and a fatty acid are used in combination, the viscosity of the heat storage material composition of the present invention increases, thereby making it possible to prevent the bleeding of the linear saturated hydrocarbon compounds effectively.

As the fatty acid which is preferably used in combination with the fatty acid metal salt in the binder component (D) may be used, for example, a saturated or unsaturated long-chain fatty acid having 10 to 30 carbon atoms. Examples of the long-chain saturated fatty acid include lauric acid, tridecyl acid, myristic acid, pentadecylic acid, palmitic acid, margaric acid, stearic acid, isostearic acid and behenic acid; and examples of the long-chain unsaturated fatty acid include oleic acid, linoleic acid, linolenic acid, elaidic acid and erucic acid. Out of these, oleic acid is particularly preferably used. Commercially available products of the oleic acid include the Nsp gelling aid (of Hope Chemical Co., Ltd.).

These fatty acids which are preferably used in combination with the fatty acid metal salt may be used alone or in combination of two or more.

When the fatty acid metal salt and the fatty acid are used in combination, as for the ratio of these, the amount of the fatty acid is preferably 5 to 100 parts by mass, more preferably 20 to 80 parts by mass, much more preferably 25 to 75 parts by mass based on 100 parts by mass of the fatty acid metal salt.

In the heat storage material composition of the present invention, the above binder components (D) may be used alone or in combination of two or more.

The content of the binder component (D) in the heat storage material composition of the present invention is preferably not more than 70 mass%, more preferably 2 to 70 mass%, much more preferably 3 to 25 mass%, particularly preferably 4.5 to 20 mass%, most preferably 5 to 15 mass% based on the total amount of the composition. When a mixture of the fatty acid metal salt and the fatty acid is used as the binder component (D), the content of the above binder component (D) means the total content of the fatty acid metal salt and the fatty acid.

<one example of method of setting composition to achieve desired phase change temperature>

A description is subsequently given of an example of a guideline on how to set the types and ratio of components so that the heat storage material composition of the present invention comprising the above components exhibits a desired phase change temperature.

A description is first given of a case where the heat storage material composition of the present invention does not comprise the binder component (D) and then a case where the heat storage material composition of the present invention comprises the binder component (D).

When the heat storage material composition of the present invention does not comprise the binder component (D), the types and ratio of the other components are selected as follows.

When the desired phase change temperature is T(°C), a suitable one is selected from linear saturated hydrocarbon compounds (A) having a melting point around T(°C). Since the scope of the linear saturated hydrocarbon compounds (B) which can be used is automatically determined by selecting the linear saturated hydrocarbon compound (A), a suitable linear saturated hydrocarbon compound (B) is selected from these and used. The ratio of the linear saturated hydrocarbon compound (A) and the linear saturated hydrocarbon compound (B) can be set by a difference $\Delta T$ between the desired phase change temperature T and the melting point of the linear saturated hydrocarbon compound (A). As the difference $\Delta T$ becomes larger, the relative content of the linear saturated hydrocarbon compound (B) should be increased within the above range, and when $\Delta T$ is small, the relative content of the linear saturated hydrocarbon compound (B) should be reduced.

The type and content of the organic compound (C) can be set by $\Delta T$ as well. When $\Delta T$ is large, the content of the organic compound (C) should be increased and when $\Delta T$ is small, the content of the organic compound (C) should be reduced

By carrying out preliminary experiments based on the above guideline, a person skilled in the art can know the optimum composition of the heat storage material composition which exhibits a desired phase change temperature.

A description is subsequently given of the case where the heat storage material composition of the present invention comprises the binder component (D).

The type and content of the binder component (D) are first set according to the desired hardness of the heat storage material composition. When it is desired to prepare a harder heat storage material composition, a harder binder component (D) should be used in a larger ratio within the above range, and when it is desired to prepare a softer heat storage material composition, a softer binder component (D) should be used in a smaller ratio. The phase change temperature of the heat storage material composition comprising the binder component (D) is lower than that of the heat storage material composition comprising no binder component (D). The degree of this change depends on the content of the binder component (D).

Therefore, taking what has been described above into consideration, it is possible to know the optimum composition of the heat storage material composition which exhibits a desired phase change temperature by selecting the types and ratio of the linear saturated hydrocarbon component (A), the linear saturated hydrocarbon component (B) and the organic compound (C) according to the case where the heat storage material composition does not comprise the binder component and by carrying out a few preliminary experiments.

<Other components>

The heat storage material composition of the present invention may comprise other components in addition to the above linear saturated hydrocarbon component (A), the linear saturated hydrocarbon component (B), the organic compound (C) and optionally the binder component (D) as long as the effect of the present invention is not reduced.

The other components include a colorant, metal powder, inorganic fiber, organic fiber, thermal conductivity imparting agent, glass, inorganic whisker, filler, antioxidant, antistatic agent, weathering agent, ultraviolet absorbent, antiblocking agent, crystal nucleating agent, flame retardant, vulcanizing agent, vulcanizing aid, antibacterial and antifungal agent, dispersant, coloring inhibitor, foaming agent and anticorrosion material.

Examples of the above colorant include titanium oxide and carbon black; examples of the above metal powder include ferrite; examples of the above inorganic fiber include glass fibers, metal fibers and asbestos; examples of the above organic fiber include carbon fibers and aramid fibers; examples of the above thermal conductivity imparting agent include aluminum nitride, boron nitride, aluminum hydroxide, aluminum oxide, magnesium oxide, carbon nanotubes and expanded graphite; examples of the above glass include glass beads, glass balloons and glass flakes; examples of the above inorganic whisker include potassium titanate whiskers and zinc oxide whiskers; examples of the above filler include talc, silica, calcium silicate, kaolin, diatomaceous earth, montmorillonite, graphite, pumice, ebonite powders, cotton flocks, cork powders, barium sulfate and fluorine resin; and examples of the above flame retardant include metal hydroxides, phosphorus-based flame retardants and halogen-based flame retardants. At least one selected from these may be used.

The total content of the other components is preferably not more than 30 mass%, more preferably not more than 10 mass% based on the total amount of the heat storage material composition of the present invention.

<Method of preparing heat storage material composition>

The heat storage material composition of the present invention may be produced by any method as long as it comprises the above components.

When the heat storage material composition of the present invention does not comprise the binder component (D), it can be produced by mixing together the linear saturated hydrocarbon component (A), the linear saturated hydrocarbon component (B), the organic compound (C) and optionally other components by using suitable means. The mixing means used herein is, for example, an agitation type mixer or a magnetic stirrer.

When the heat storage material composition of the present invention comprises the binder component (D), it can be produced by mixing together the linear saturated hydrocarbon component (A), the linear saturated hydrocarbon component (B), the organic compound (C), the binder component (D) and optionally other components by using suitable means. The mixing means used herein is, for example, two rolls, an extruder, a double-screw kneading extruder or an agitation type mixer. The mixing temperature is preferably within the plasticizing temperature range of the binder component (D), for example, 80 to 200°C. Since the composition is solidified by cooling after mixing, it can be molded into any form by suitable means such as casting into a form or stretching.

<Heat storage material>

The heat storage material composition of the present invention produced as described above may be used as a heat storage material as it is or after it is enclosed in a suitable package material or a container. It is preferred to enclose it in a package material because the heat storage material composition can be easily handled as a heat storage material and becomes excellent in long-term stability.

Examples of the package material which can be used herein include films such as polyolefin films, polyester films, polyamide films and ethylene·vinyl alcohol copolymer films; package materials obtained by forming a metal layer on these films by lamination or vapor deposition; and package materials produced by using a multi-layer film consisting of a plurality of the above films. When the above package material is produced by using a multi-layer film, the multi-layer film may have an adhesive layer in addition to the film layers enumerated above.

Examples of the container include blow containers obtained by blow molding a synthetic resin and metal containers.

The preferred package material in the present invention is produced by using only a film having heat fusibility (heat-fusible layer) or by using a multi-layer film consisting of a heat-fusible layer as an innermost layer and other film layers. Out of these, the latter package material is particularly preferred.

The above heat-fusible layer serves as a heat sealing layer. Therefore, in order to enclose the heat storage material composition of the present invention in the above preferred package material, from the viewpoint of productivity, it is preferred to adopt, for example, a method in which, after the heat storage material composition of the present invention is filled into the above preferred package material which has been formed into a bag shape with one end open by means of a suitable known filling machine, the opening is heat sealed to hermetically seal the heat storage material composition (heat sealing method).

As the above heat-fusible layer film, for example, a polyolefin film is preferably used. More specifically, it is a film made of polyethylene or polypropylene.

When the package material in the present invention is produced by using a multi-layer film, the layers except for the above film having heat fusibility include, for example, a barrier layer for preventing the volatilization of the linear saturated hydrocarbon compound (A) and the linear saturated hydrocarbon compound (B) and a heat-resistant layer for compensating for the heat resistance of the heat storage material composition of the present invention.

As the above barrier layer, for example, a polyester film or a polyamide film may be used.

As the above heat-resistant layer, for example, a polyester film may be used, as exemplified by a film made of polyethylene terephthalate (PET).

The package material in the present invention is most preferably a package material which has an innermost layer, an outermost layer and at least one intermediate layer at an intermediate position between them, wherein the innermost layer is a film layer having heat fusibility, the outermost layer is a heat-resistant layer and at least one of the intermediate layers is a barrier layer. In this case, the package material may have two or more barrier layers as intermediate layers, a film layer having another function except for the functions of the heat-fusible layer, the heat-resistant layer and the barrier layer, and adhesive layers between these layers.

EXAMPLES

Evaluations in the following examples and comparative examples were made by the following methods.

<Melting points of linear saturated hydrocarbon compounds>

They were measured by a differential scanning calorimeter (DSC) as follows.

DSC measurement was made by keeping a sample at 100 °C for 30 minutes, cooling it to -50°C at a rate of 10°C/min, keeping it at that temperature for 30 minutes and increasing the temperature at a rate of 10°C/min. In accordance with JIS K7122, the extrapolation melting start temperature of the obtained DSC chart was taken as melting point.

<DSC peak shape>

In the DSC chart of each heat storage material composition measured as a sample by the same method as above, when the heat absorption curve had a single peak, it was evaluated as "monomodal" and when the heat absorption curve had two melting peaks, it was evaluated as "bimodal".

<Melting point of heat storage material composition>

The extrapolation melting start temperature in the DSC chart of the above heat storage material composition was taken as melting point. When there were two peaks, the melting point was evaluated for each peak.

<Freezing point of heat storage material composition>

The extrapolation crystallization start temperature in the DSC chart of the above heat storage material composition was taken as freezing point.

When there were two peaks, the freezing point was evaluated for each peak.

<Amount of latent heat>

In accordance with JIS K7122, the amount of latent heat was measured by a differential scanning calorimeter. The DSC measurement conditions were the same as above, and the amount of heat equivalent to a peak area in the obtained DSC chart was taken as the amount of latent heat (kJ/kg).

When there were two peaks, the amount of latent heat was evaluated for each peak.

<Efficacy of freezing-point depressant>

When a reduction in the phase change temperature was large with respect to the amount of the freezing-point depressant and the number of phase change peaks of the linear saturated hydrocarbon compound was not two in the DSC chart of the above heat storage material composition, it was evaluated that the freezing-point depressant worked effectively and the efficacy of the freezing-point depressant was "satisfactory". When a reduction in the phase change temperature was small with respect to the amount of the freezing-point depressant or the number of phase change peaks of the linear saturated hydrocarbon compound was two, Lhe efficacy of the freezing-point depressant was evaluated as "unsatisfactory".

<Bleeding resistance>

The heat storage material composition prepared in each Example or Comparative Example was filled and enclosed into a package material composed of a polyethylene (PE)/polypropylene (PP) laminated film (inner layer: PE, outer layer: PP, 15 μm) produced by dry lamination without a space and left to stand at 50°C for 24 hours so as to visually check whether the linear saturated hydrocarbon compounds separated from the binder component or not.
When the separation of the linear saturated hydrocarbon compounds was not seen, the bleeding resistance was evaluated as "satisfactory", when the slight separation of the linear saturated hydrocarbon compounds was seen, the bleeding resistance was evaluated as "acceptable", and when the linear saturated hydrocarbon compounds apparently separated, the bleeding resistance was evaluated as "unsatisfactory".

Example 1

72.9 parts by mass of n-decane as the linear saturated hydrocarbon compound (A), 8.1 parts by mass of n-nonane as the linear saturated hydrocarbon compound (B), 9 parts by mass of n-hexane (c6) as a freezing-point depressant and 10 parts by mass of DR6360B (trade name, ethylene-ethylene· butylene-ethylene block copolymer, manufactured by JSR Corporation) as a binder component were fed to a glass flask and mixed together at 90°C for 2 hours to prepare a heat storage material composition.
Various evaluations were made on the above heat storage material composition. The evaluation results are shown in Table 1.

Examples 2 to 20 and Comparative Examples 1 to 10

Heat storage material compositions were prepared and evaluated in the same manner as in Example 1 except that the types and contents of the linear saturated hydrocarbon compound (A), the linear saturated hydrocarbon compound (B) and the freezing-point depressant were changed as shown in Table 1. The evaluation results are shown in Table 1.
No binder component was used in Examples 13 and 20, and no freezing-point depressant was used in Comparative Examples 1 to 3.

Table 1  Composition and evaluation of heat storage material composition

| | | Ex.1 | Ex.2 | Ex.3 | Ex.4 |
|---|---|---|---|---|---|
| linear saturated hydrocarbon compound (A) | type | C10 | C14 | C14 | C16 |
| | parts by mass | 72.9 | 64.8 | 68.4 | 64.8 |
| linear saturated hydrocarbon compound (B) | type | C9 | C13 | C13 | C15 |
| | parts by mass | 8.1 | 16.2 | 17.1 | 16.2 |
| value of m | | −1 | −1 | −1 | −1 |
| freezing-point depressant | type | n-hexane | 1-dodecene | 1-dodecene | 1-dodecene |
| | parts by mass | 9 | 9 | 4.5 | 9 |
| binder component | type | DR6360B | DR6360B | DR6360B | DR6360B |
| | parts by mass | 10 | 10 | 10 | 10 |
| difference in melting point (°C) between linear saturated hydrocarbon compound (B) and freezing-point depressant | | 65 | 35 | 35 | 50 |
| heat storage material composition | DSC peak shape | monomodal | monomodal | monomodal | monomodal |
| | Melting point(°C) | −35.3 | −6.6 | −5 | 6.2 |
| | Freezing point(°C) | −36.8 | −5.8 | −4.6 | 8.4 |
| | Amount of latent heat (kJ/kg) | 111 | 159 | 167 | 170 |
| | Efficacy of freezing-point depressant | satisfactory | satisfactory | satisfactory | satisfactory |
| | Bleeding resistance | satisfactory | satisfactory | satisfactory | satisfactory |

Ex.:Example                                                        (to be continued)

Table 1(continued)

|  |  | Ex.5 | Ex.6 | Ex.7 | Ex.8 |
|---|---|---|---|---|---|
| linear saturated hydrocarbon compound (A) | type | C16 | C18 | C18 | C18 |
|  | parts by mass | 68.4 | 72.9 | 64.8 | 72.9 |
| linear saturated hydrocarbon compound (B) | type | C15 | C17 | C17 | C17 |
|  | parts by mass | 17.1 | 8.1 | 16.2 | 8.1 |
| value of m |  | -1 | -1 | -1 | -1 |
| freezing-point depressant | type | 1-dodecene | 1-dodecene | 1-dodecene | 1-tetradecene |
|  | parts by mass | 4.5 | 9 | 9 | 9 |
| binder component | type | DR6360B | DR6360B | DR6360B | DR6360B |
|  | parts by mass | 10 | 10 | 10 | 10 |
| difference in melting point (°C) between linear saturated hydrocarbon compound (B) and freezing-point depressant |  | 50 | 62 | 62 | 40 |
| heat storage material composition | DSC peak shape | monomodal | monomodal | monomodal | monomodal |
|  | Melting point(°C) | 7.2 | 19.5 | 17.6 | 19.9 |
|  | Freezing point(°C) | 9.5 | 20.9 | 19.4 | 21.4 |
|  | Amount of latent heat (kJ/kg) | 182 | 181 | 163 | 182 |
|  | Efficacy of freezing-point depressant | satisfactory | satisfactory | satisfactory | satisfactory |
|  | Bleeding resistance | satisfactory | satisfactory | satisfactory | satisfactory |

Ex.:Example
(to be continued)

Table 1(continued)

|  |  | Ex.9 | Ex.10 | Ex.11 | Ex.12 |
|---|---|---|---|---|---|
| linear saturated hydrocarbon compound (A) | type | C18 | C18 | C18 | C18 |
|  | parts by mass | 72.9 | 72.9 | 72.9 | 72.9 |
| linear saturated hydrocarbon compound (B) | type | C17 | C17 | C17 | C17 |
|  | parts by mass | 8.1 | 8.1 | 8.1 | 8.1 |
| value of m |  | -1 | -1 | -1 | -1 |
| freezing-point depressant | type | Isoparaffin | heptyl ether | n-hexane | 1-dodecene |
|  | parts by mass | 9 | 9 | 9 | 9 |
| binder component | type | DR6360B | DR6360B | DR6360B | SEBS |
|  | parts by mass | 10 | 10 | 10 | 10 |
| difference in melting point (°C) between linear saturated hydrocarbon compound (B) and freezing-point depressant |  | 105 | 48 | 121 | 62 |
| heat storage material composition | DSC peak shape | monomodal | monomodal | monomodal | monomodal |
|  | Melting point(°C) | 20.9 | 20.6 | 18.9 | 20.4 |
|  | Freezing point(°C) | 22.1 | 21.9 | 18.8 | 21.4 |
|  | Amount of latent heat (kJ/kg) | 182 | 183 | 179 | 184 |
|  | Efficacy of freezing-point depressant | satisfactory | satisfactory | satisfactory | satisfactory |
|  | Bleeding resistance | satisfactory | satisfactory | satisfactory | satisfactory |

Ex.:Example
(to be continued)

Table 1(continued)

| | | Ex.13 | Ex.14 | Ex.15 | Ex.16 |
|---|---|---|---|---|---|
| linear saturated hydrocarbon compound (A) | type | C18 | C14 | C14 | C16 |
| | parts by mass | 81 | 64.8 | 72.9 | 72.9 |
| linear saturated hydrocarbon compound (B) | type | C17 | C13 | C15 | C17 |
| | parts by mass | 9 | 16.2 | 8.1 | 8.1 |
| value of m | | −1 | −1 | +1 | +1 |
| freezing-point depressant | type | 1-dodecene | 1-dodecene | 1-dodecene | 1-tetradecene |
| | parts by mass | 10 | 9 | 9 | 10 |
| binder component | type | — | Fatty acid metal salt | DR6360B | SEBS |
| | parts by mass | 0 | 10 | 10 | 10 |
| difference in melting point (°C) between linear saturated hydrocarbon compound (B) and freezing-point depressant | | 62 | 35 | 47 | 40 |
| heat storage material composition | DSC peak shape | monomodal | monomodal | monomodal | monomodal |
| | Melting point(°C) | 20.8 | −6.7 | 1.5 | 8.5 |
| | Freezing point(°C) | 21.9 | −5.8 | 0.1 | 7.3 |
| | Amount of latent heat (kJ/kg) | 200 | 159 | 180 | 178 |
| | Efficacy of freezing-point depressant | satisfactory | satisfactory | satisfactory | satisfactory |
| | Bleeding resistance | − | satisfactory | satisfactory | Acceptable |

Ex.:Example (to be continued)

Table 1(continued)

| | | Ex.17 | Ex.18 | Ex.19 | Ex.20 |
|---|---|---|---|---|---|
| linear saturated hydrocarbon compound (A) | type | C16 | C18 | C16 | C14 |
| | parts by mass | 64.8 | 64.8 | 75 | 81 |
| linear saturated hydrocarbon compound (B) | type | C13 | C15 | C19 | C17 |
| | parts by mass | 16.2 | 16.2 | 6 | 9 |
| value of m | | −3 | −3 | +3 | +3 |
| freezing-point depressant | type | 1-dodecene | 1-dodecene | 1-dodecene | 1-dodecene |
| | parts by mass | 9 | 9 | 9 | 10 |
| binder component | type | DR6360B | Fatty acid metal salt | Fatty acid metal salt | — |
| | parts by mass | 10 | 10 | 10 | 0 |
| difference in melting point (°C) between linear saturated hydrocarbon compound (B) and freezing-point depressant | | 35 | 50 | 40 | 47 |
| heat storage material composition | DSC peak shape | monomodal | monomodal | monomodal | monomodal |
| | Melting point(°C) | 5.9 | 17.5 | 8.7 | 3.5 |
| | Freezing point(°C) | 6.3 | 19.2 | 9.1 | 4.9 |
| | Amount of latent heat (kJ/kg) | 168 | 16.2 | 180 | 180 |
| | Efficacy of freezing-point depressant | satisfactory | satisfactory | satisfactory | satisfactory |
| | Bleeding resistance | satisfactory | satisfactory | − | satisfactory |

Ex.:Example (to be continued)

Table 1(continued)

| | | C.Ex.1 | C.Ex.2 | C.Ex.3 | C.Ex.4 |
|---|---|---|---|---|---|
| linear saturated hydrocarbon compound (A) | type | C14 | C16 | C18 | C18 |
| | parts by mass | 72 | 72 | 81 | 56.7 |
| linear saturated hydrocarbon compound (B) | type | C13 | C15 | C17 | C17 |
| | parts by mass | 18 | 18 | 9 | 24.3 |
| value of m | | -1 | -1 | -1 | -1 |
| freezing-point depressant | type | - | - | - | 1-dodecene |
| | parts by mass | 0 | 0 | 0 | 9 |
| binder component | type | DR6360B | DR6360B | DR6360B | DR6360B |
| | parts by mass | 10 | 10 | 10 | 10 |
| difference in melting point (°C) between linear saturated hydrocarbon compound (B) and freezing-point depressant | | - | — | — | 62 |
| heat storage material composition | DSC peak shape | monomodal | monomodal | monomodal | bimodal |
| | Melting point(°C) | -3 | 11.9 | 22.9 | 17.9/11.2 |
| | Freezing point(°C) | -3.6 | 11.8 | 23.7 | 19.4/6.2 |
| | Amount of latent heat (kJ/kg) | 180 | 201 | 207 | 110/67 |
| | Efficacy of freezing-point depressant | - | - | - | satisfactory |
| | Bleeding resistance | satisfactory | satisfactory | satisfactory | satisfactory |

C.Ex.: Comparative Example                                                    (to be continued)

Table 1(continued)

| | | C.Ex.5 | C.Ex.6 | C.Ex.7 | C.Ex.8 |
|---|---|---|---|---|---|
| linear saturated hydrocarbon compound (A) | type | C18 | C14 | C16 | C16 |
| | parts by mass | 40.5 | 64.8 | 64.8 | 68.4 |
| linear saturated hydrocarbon compound (B) | type | C17 | C13 | C15 | C15 |
| | parts by mass | 40.5 | 16.2 | 16.2 | 17.1 |
| value of m | | -1 | -1 | -1 | -1 |
| freezing-point depressant | type | 1-dodecene | 1-tetradecene | 1-tetradecene | cyclopentanol |
| | parts by mass | 9 | 9 | 9 | 4.5 |
| binder component | type | DR6360B | DR6360B | DR6360B | DR6360B |
| | parts by mass | 10 | 10 | 10 | 10 |
| difference in melting point (°C) between linear saturated hydrocarbon compound (B) and freezing-point depressant | | 62 | 14 | 29 | 50 |
| heat storage material composition | DSC peak shape | bimodal | monomodal | bimodal | monomodal |
| | Melting point(°C) | 17.7/1.06 | -5.3 | 8.1/-7.9 | 10.5 |
| | Freezing point(°C) | 17.9/-1.1 | -4.2 | 9.2/-10.1 | 10.8 |
| | Amount of latent heat (kJ/kg) | 132/25 | 173 | 131/46 | 182 |
| | Efficacy of freezing-point depressant | satisfactory | unsatisfactory | unsatisfactory | unsatisfactory |
| | Bleeding resistance | satisfactory | satisfactory | satisfactory | unsatisfactory |

C.Ex.: Comparative Example                                                    (to be continued)

Table 1(continued)

|  |  | C.Ex.9 | C.Ex.10 |
|---|---|---|---|
| linear saturated hydrocarbon compound (A) | type | C16 | C16 |
|  | parts by mass | 68.4 | 68.4 |
| linear saturated hydrocarbon compound (B) | type | C15 | C15 |
|  | parts by mass | 17.1 | 17.1 |
| value of m |  | -1 | -1 |
| freezing-point depressant | type | tributyl citrate | PW-90 |
|  | parts by mass | 4.5 | 4.5 |
| binder component | type | DR6360B | DR6360B |
|  | parts by mass | 10 | 10 |
| difference in melting point (°C) between linear saturated hydrocarbon compound (B) and freezing-point depressant |  | 32 | 65 |
| heat storage material composition | DSC peak shape | monomodal | monomodal |
|  | Melting point(°C) | 10.7 | 10.4 |
|  | Freezing point(°C) | 10.9 | 10.8 |
|  | Amount of latent heat (kJ/kg) | 184 | 181 |
|  | Efficacy of freezing-point depressant | unsatisfactory | unsatisfactory |
|  | Bleeding resistance | unsatisfactory | satisfactory |

C.Ex.: Comparative Example

The abbreviations of the components in Table 1 mean the following components.

<linear saturated hydrocarbon compound (A)>

C10: n-decane
C14: n-tetradecane
C16: n-hexadecane
C18: n-octadecane

<linear saturated hydrocarbon compound (B)>

C9: n-nonane
C13: n-tridecane
C15: n-pentadecane
C17: n-heptadecane
C19: n-nonadecane

<freezing-point depressant>

Isoparaffin: "IP Solvent 2028", manufactured by Demits Kosan Co., Ltd., a mixture of branched alkanes having 12 to 16 carbon atoms
Heptyl ether: di-n-heptyl ether
PW-90: "Diana Process Oil PW-90", manufactured by Demits Kosan Co., Ltd., paraffin oil (weight average molecular weight of 750)

<binder component>

DR6360B: (trade name, manufactured by JSR Corporation, ethylene-ethylene·butylene-ethylene block copolymer)
SEBS: ("Kraton G1651", manufactured by JSR Corporation, styrene-ethylene·butene-styrene block copolymer)
Fatty acid metal salt: a mixture of 70 mass% of Octope Alumi A (trade name, manufactured by Hope Chemical Co., Ltd.) and 30 mass% of the Nsp gelling aid (trade name, manufactured by Hope Chemical Co., Ltd.)

Out of the freezing-point depressants, the compounds used in Examples 1 to 20 and Comparative Examples 4 and 5 correspond to the predetermined organic compound (C) of the present invention. The compounds used in Comparative Examples 6 to 10 do not correspond to the predetermined organic compound (C) of the present invention. The amount (parts by mass) of the "fatty acid metal salt" in Examples 14, 18 and 19 is the total amount of the Octope Alumi A and the Nsp gelling aid.

In the columns for melting point, freezing point and amount of latent heat in Table 1, two numerical values marked off by "/" were the evaluation results of two peaks in the DSC chart.

Effect of the Invention

The heat storage material composition of the present invention enables the setting of a desired phase change temperature by selecting the constituent components and adjusting the ratio of these components and has a large amount of latent heat.

According to a preferred embodiment of the present invention which further comprises a binder component (D), there is provided a heat storage material composition which does not experience phase separation and the bleeding of linear saturated hydrocarbon compounds even when $T_{ax}$ of each of the linear saturated hydrocarbon compounds in use is exceeded and has excellent shape retention properties after solidification while it exhibits high flowability during molding.

**Claims**

1.  A heat storage material composition comprising:

    (A) a linear saturated hydrocarbon compound having 2n carbon atoms;
    (B) a linear saturated hydrocarbon compound having (2n+m) carbon atoms; and
    (C) an organic compound having a molecular weight of 50 to 300, a solubility parameter of 5 to 8.5 $(cal/cm^3)^{0.5}$ and a melting point measured by a differential scanning calorimeter which is 30°C or more lower than that of the linear saturated hydrocarbon compound (B), wherein

    "n" is a single number selected from a natural number of 4 or more, "n" in the linear saturated hydrocarbon compound (A) and "n" in the linear saturated hydrocarbon compound (B) are the same, "m" is -3, -1, +1 or +3, and the mass ratio $M_A:M_B$ of the content $M_A$ of the linear saturated hydrocarbon compound (A) to the content $M_B$ of the linear saturated hydrocarbon compound (B) is 99:1 to 80:20.

2.  The heat storage material composition according to claim 1, wherein "m" is -3, -1 or +1.

3.  The heat storage material composition according to claim 2, wherein "m" is -1.

4. The heat storage material composition according to any one of claims 1 to 3, wherein the organic compound (C) is at least one selected from the group consisting of $\alpha$-olefin, n-hexane, isoparaffin, aliphatic ether, aliphatic ketone, aliphatic alcohol and aliphatic ester.

5. The heat storage material composition according to any one of claims 1 to 3, wherein the mass ratio $(M_A+M_B):M_C$ of the total of the content $M_A$ of the linear saturated hydrocarbon compound (A) and the content $M_B$ of the linear saturated hydrocarbon compound (B) to the content $M_C$ of the organic compound (C) is 99:1 to 80:20.

6. The heat storage material composition according to any one of claims 1 to 3, further comprising (D) a binder component.

7. The heat storage material composition according to claim 6, wherein the binder component (D) is a hydrogenated block (co)polymer.

8. A heat storage material which is formed from the heat storage material composition of any one of claims 1 to 3.

9. A heat storage material in which the heat storage material composition of any one of claims 1 to 3 is enclosed in a package material or a container.

## INTERNATIONAL SEARCH REPORT

| International application No. |
| --- |
| PCT/JP2013/071987 |

**A. CLASSIFICATION OF SUBJECT MATTER**
*C09K5/06*(2006.01)i, *C08K5/01*(2006.01)i, *C08L53/00*(2006.01)i, *F28D20/00*(2006.01)i

According to International Patent Classification (IPC) or to both national classification and IPC

**B. FIELDS SEARCHED**

Minimum documentation searched (classification system followed by classification symbols)
C09K5/06, C08K5/01, C08L53/00, F28D20/00

Documentation searched other than minimum documentation to the extent that such documents are included in the fields searched
Jitsuyo Shinan Koho        1922–1996    Jitsuyo Shinan Toroku Koho   1996–2013
Kokai Jitsuyo Shinan Koho  1971–2013    Toroku Jitsuyo Shinan Koho   1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2004-300424 A (Dainichiseika Color & Chemicals Mfg. Co., Ltd.), 28 October 2004 (28.10.2004), example 22 (Family: none) | 1-9 |
| A | JP 2004-143229 A (Dai-Ichi Kogyo Seiyaku Co., Ltd.), 20 May 2004 (20.05.2004), examples 12 to 22 (Family: none) | 1-9 |
| A | JP 2009-173834 A (Japan Energy Corp.), 06 August 2009 (06.08.2009), claims; examples (Family: none) | 1-9 |

[X] Further documents are listed in the continuation of Box C.     [ ] See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 November, 2013 (05.11.13) | 26 November, 2013 (26.11.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/071987 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-171031 A  (Toho Chemical Industry Co., Ltd.),<br>30 June 2005 (30.06.2005),<br>example 5<br>(Family: none) | 1-9 |
| A | JP 2006-241285 A  (Dai-Ichi Kogyo Seiyaku Co., Ltd.),<br>14 September 2006 (14.09.2006),<br>examples<br>(Family: none) | 1-9 |
| A | JP 6-346047 A  (Mitsubishi Cable Industries, Ltd.),<br>20 December 1994 (20.12.1994),<br>example 7<br>(Family: none) | 1-9 |
| A | JP 2003-336980 A  (Nippon Shokubai Co., Ltd.),<br>28 November 2003 (28.11.2003),<br>example 2<br>(Family: none) | 1-9 |
| A | JP 2005-42040 A  (Harima Chemicals, Inc.),<br>17 February 2005 (17.02.2005),<br>examples<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001078340 A
- WO 3134504 A
- WO 3360411 A

**Non-patent literature cited in the description**

- Role of Solubility Parameter (SP) in Solubility Theory (Part 1). *Adhesion Society of Japan,* 1993, vol. 29 (5), 204-211